# FASCICULE DE BREVET EUROPEEN

(11) **EP 3 633 154 B1**
(45) Date de publication et mention de la délivrance du brevet: **15.09.2021**
(21) Numéro de dépôt: 19201287.0
(22) Date de dépôt: 03.10.2019
(51) Int. Cl.: F01D 21/00, G01L 19/14, G01M 15/14

(54) **AUBE DE TURBOMACHINE D'AÉRONEF INTÉGRANT AU MOINS UN CAPTEUR DE PRESSION**
SCHAUFEL EINER TURBOMASCHINE EINES LUFTFAHRZEUGS, DIE MINDESTENS EINEN DRUCKSENSOR UMFASST
BLADE OF AN AIRCRAFT TURBOMACHINE INCLUDING AT LEAST ONE PRESSURE SENSOR

(30) Priorité: 05.10.2018 BE 201805683
(43) Date de publication de la demande: 08.04.2020
(73) Titulaire: Safran Aero Boosters S.A., 4041 Herstal (BE)
(72) Inventeur: RAIMARCKERS, Nicolas, 4263 Tourinne (BE); DUMONT, Maxime, 4040 Herstal (BE); PEREZ, Rafael, 4100 Boncelles (BE); VALLINO, Frédéric, 4100 Seraing (BE)
(74) Mandataire: Gevers Patents

(56) Documents cités:
- DE-A1-102006 046 224
- FR-A1- 2 262 288
- FR-A1- 2 786 564
- US-A1- 2010 107 774
- US-A1- 2014 182 292

## Description

### Domaine technique

La présente invention concerne une pièce prévue pour faire partie d'une turbomachine d'aéronef. La pièce intègre au moins un capteur de pression.

### Art antérieur

Quand on cherche à mesurer la pression régnant dans une zone d'une turbomachine d'aéronef, il est intéressant de placer un capteur de pression dans ladite zone. Un inconvénient d'un tel capteur est que sa présence, et en particulier la présence de son boitier de protection dévie de flux d'air et perturbe la mesure.

En outre, lorsqu'un capteur est fixé sur une surface extérieure d'une pièce de la turbomachine, cette fixation doit être extrêmement solide au vu de la pression exercée par les flux d'air. Cette fixation requiert donc énormément de matériau de fixation, par exemple de colle, ce qui augmente encore l'impact aérodynamique de l'ensemble capteur et fils.
Le document US2014/182292A1 divulgue une aube pourvue d'une cavité dans son bord d'attaque, cette cavité étant reliée par un conduit à un capteur situé en-dehors de l'aube.
Le document US2010/107774A1 divulgue une sonde de pression miniature.

### Résumé de l'invention

Un des buts de l'invention est de fournir un moyen pour faire des mesures de pression dans une zone d'une turbomachine d'aéronef qui perturbe peu le flux d'air dans ladite zone.

A cet effet, l'invention propose une pièce pour turbomachine d'aéronef selon la revendication 1.

Dans l'invention, la surface extérieure du premier capteur comprend au moins une partie de la première membrane. Par conséquent, le premier capteur ne comprend pas de boitier de protection situé devant la première membrane et sur les côtés du premier capteur. En effet, le premier capteur étant logé dans une cavité d'une pièce de la turbomachine, il n'a pas besoin d'un boitier de protection qui augmenterait son volume puisque le corps de pièce fournit au capteur une excellente protection latérale.

Le fait que le capteur soit localisé à l'intérieur d'une pièce de la turbomachine et non fixé sur une surface extérieure d'une pièce de la turbomachine permet d'éviter de devoir le fixer avec une grande quantité de colle. Cela permet aussi que la fixation du capteur au corps de pièce soit particulièrement solide et particulièrement résistante au flux d'air.

La pièce selon l'invention permet en outre une bonne protection du ou des câbles connecté(s) au premier capteur puisqu'ils sont au moins en partie situés dans le premier conduit, à l'intérieur du corps de pièce.

Le premier conduit met en communication la première cavité et l'extérieur du corps de pièce. De préférence, la première cavité débouche sur une première surface du corps de pièce et le premier conduit débouche sur une deuxième surface du corps de pièce, différente de la première surface.

Eviter tout décollement du capteur et/ou du câble est particulièrement avantageux car si un élément se décollait, il pourrait endommager des éléments en aval.

La pièce de la turbomachine est une aube de turbomachine d'aéronef. La forme de l'aube peut alors devoir être modifiée pour inclure une protubérance afin d'inclure le capteur.

De préférence, la première membrane est située à une extrémité du premier capteur. De préférence, la première membrane est située face à la première ouverture. De préférence, la première membrane affleure l'extrémité du premier capteur. De préférence, la première membrane est directement dans la première cavité dans le sens où il n'y a pas de séparation entre la première membrane et la paroi interne de la première cavité.

Le premier conduit forme un rétrécissement de la première cavité. Ainsi, la surface d'une section du premier conduit soit plus petite que la surface d'une section de la première cavité.

De préférence, le premier capteur ne comprend pas de boitier de protection situé devant la première membrane et/ou sur les côtés du capteurs. Le capteur peut faire par exemple 1,2 mm de largeur. De préférence, le premier capteur est totalement logé dans la première cavité. De préférence, le(s) capteur(s) utilisé(s) dans l'invention sont aussi apte(s) à mesurer une température. Le capteur est de préférence piézorésistif. De préférence, la première cavité a des dimensions telles que le premier capteur y est logé, au moins partiellement, de façon ajustée. L'espace entre les parois internes latérales de la première cavité et les parois externes latérales du premier capteur peut être comblé par un matériau de fixation, telle un matériau collant.

La pièce a une fonction mécanique et/ou aérodynamique dans la turbomachine.

Dans un mode de réalisation de l'invention, la pièce comprend en outre une première grille située entre l'extérieur du corps de pièce et le premier capteur.

La grille permet de faire passer l'air vers la première membrane du premier capteur tout en la protégeant. La grille est préférentiellement située entre la première ouverture et la membrane du capteur. Elle est de préférence parallèle à la membrane du capteur. La grille est de préférence fixée au corps de pièce. Ainsi, elle est de préférence couplée mécaniquement indirectement au capteur via le corps de pièce. De préférence, la membrane n'est séparée de l'extérieur du corps de pièce que par la grille.

Dans un mode de réalisation de l'invention, la première cavité comprend un élargissement, la grille étant reçue dans l'élargissement.

L'élargissement est une partie de la cavité qui est évasée. Cela permet de particulièrement bien fixer la grille au corps de pièce.

Dans un mode de réalisation de l'invention, le corps de pièce est monobloc. L'invention permet ainsi d'intégrer un capteur dans un élément monobloc.

Dans un mode de réalisation de l'invention, la pièce comprend une protubérance, la première cavité étant située au moins partiellement dans la protubérance. Il peut arriver que le capteur soit plus large que la largeur habituelle du corps de pièce dans lequel le capteur est intégré. Par conséquent, les inventeurs ont pensé à créer une protubérance dans le corps de pièce afin de créer une cavité suffisamment large pour disposer le capteur.

Dans un mode de réalisation de l'invention, la pièce comprend en outre un deuxième câble connecté mécaniquement et électriquement au premier capteur, le deuxième câble étant au moins partiellement logé dans le premier conduit.

Dans un mode de réalisation de l'invention, le premier conduit comprend au moins une courbe ou un infléchissement. En d'autres termes, le conduit comprend de préférence au moins un changement de direction.

Dans un mode de réalisation de l'invention, la pièce comprend en outre un deuxième capteur de pression et un troisième câble connecté mécaniquement et électriquement au deuxième capteur, le corps de pièce comprenant :
- une deuxième cavité débouchant à l'extérieur du corps de pièce par une deuxième ouverture, et
- un deuxième conduit débouchant d'une part dans la deuxième cavité et d'autre part dans le premier conduit,
le deuxième capteur étant au moins partiellement logé dans la deuxième cavité et le troisième câble étant partiellement logé dans le deuxième conduit et partiellement logé dans une partie du premier conduit, et le deuxième capteur comprenant une deuxième membrane, le deuxième capteur étant agencé de sorte qu'au moins une partie de la deuxième membrane fait partie de la surface extérieure du deuxième capteur.

De préférence, la deuxième membrane est située à une extrémité du deuxième capteur.

De préférence, la deuxième ouverture est inclinée par rapport à la première ouverture.

Avoir plusieurs capteurs localisés de façon fixe dans une même pièce permet de placer des capteurs selon des angles et positions données. Le fait que le deuxième conduit débouche dans le premier conduit permet de rassembler les câbles à l'intérieur du corps de pièce. Cela simplifie la fabrication de la pièce et son assemblage avec une unité de traitement des données qui est connectée aux câbles.

Dans un mode de réalisation de l'invention, le corps de pièce a une forme de dôme, la deuxième ouverture étant inclinée par rapport à la première ouverture.

La pièce forme une aube de la turbomachine d'aéronef. L'aube peut par exemple faire partie d'un compresseur de la turbomachine d'aéronef.

La première cavité est située dans un bord d'attaque de l'aube. De préférence, la deuxième cavité est aussi située dans le bord d'attaque de l'aube. Il est possible que la pièce formant une aube comprenne plusieurs capteurs alignés selon la direction du bord d'attaque et/ou plusieurs capteurs alignés dans un plan perpendiculaire à la direction du bord d'attaque.

L'invention propose aussi une turbomachine d'aéronef ou une partie de turbomachine d'aéronef comprenant une pièce selon l'un quelconque des modes de réalisation de l'invention.

La turbomachine ou une partie de la turbomachine, par exemple un compresseur, peut être ainsi facilement testée dans un banc d'essai tel qu'une soufflerie. Un compresseur comprenant une pièce selon l'invention peut être testé sur un banc compresseur.

L'invention propose aussi un procédé de fabrication une pièce selon l'une selon l'un quelconque des modes de réalisation de l'invention ou d'une turbomachine selon l'un quelconque des modes de réalisation de l'invention, le procédé comprenant une impression tridimensionnelle ou une fabrication additive du corps de pièce, une insertion du premier capteur dans la première cavité et une insertion du premier câble dans le premier conduit.

S'il y a un deuxième câble, il est de préférence inséré dans le premier conduit. S'il y a plusieurs capteurs, ils sont placés de la même façon, et les câbles aussi.

Les avantages mentionnés pour le dispositif s'appliquent mutatis mutandis à la méthode.

L'invention propose aussi un procédé de fabrication d'une turbomachine selon l'un quelconque des modes de réalisation de l'invention, le procédé comprenant une fabrication de la pièce, une calibration du premier capteur et un assemblage de la pièce avec d'autres éléments de la turbomachine d'aéronef.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 est une vue en coupe schématique d'une pièce pour turbomachine d'aéronef selon un mode de réalisation de l'invention,
- la figure 2 est une vue en coupe d'une aube formant une pièce selon un mode de réalisation de l'invention,
- la figure 3 est une vue tridimensionnelle d'une aube formant une pièce selon un mode de réalisation de l'invention,
- la figure 4 est une vue en coupe d'une aube formant une pièce selon un mode de réalisation de l'invention,
- la figure 5 est une vue de face d'une pièce dont le corps de pièce a une forme de dôme,
- la figure 6 est une vue en coupe illustrant des éléments d'une turbomachine d'aéronef apte à inclure une pièce selon l'invention,
- la figure 7 est une vue en coupe d'un capteur 3 compris dans un mode de réalisation de l'invention, et
- la figure 8 schématise un agencement d'une aube dans une turbomachine d'aéronef apte à inclure une pièce selon l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments. En outre, un dispositif selon l'invention peut comprendre un « troisième » élément sans pour autant comporter de « deuxième » élément.

Sur les figures, les éléments identiques ou analogues peuvent porter les mêmes références.

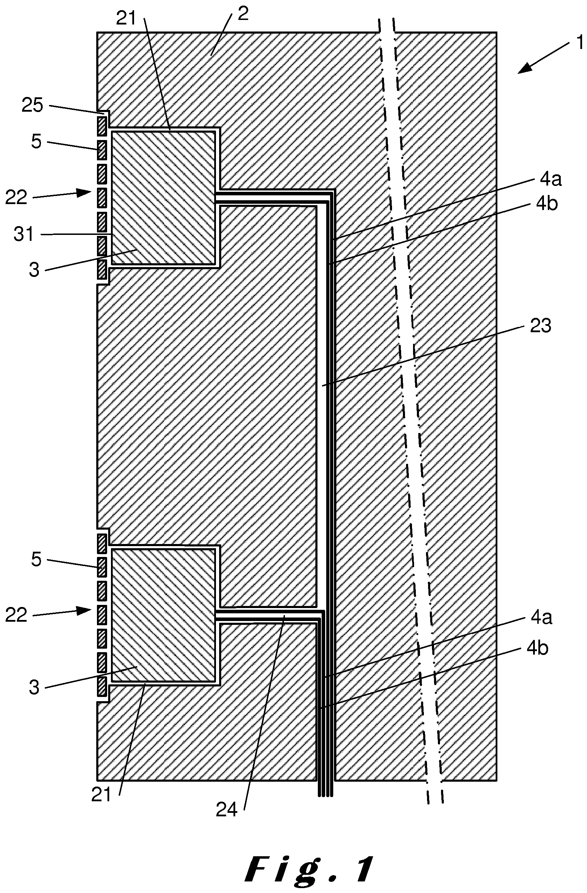

La figure 1 est une vue en coupe schématique d'une pièce 1 pour turbomachine d'aéronef selon un mode de réalisation de l'invention.

La pièce 1 comprend un corps de pièce 2, qui est de préférence monobloc. La pièce 1 comprend un premier capteur 3 de pression et un premier câble 4a connecté mécaniquement et électriquement au premier capteur 3. En outre, elle peut comprendre un deuxième câble 4b connecté mécaniquement et électriquement au premier capteur 3.

La pièce 1 comprend préférentiellement un deuxième capteur 3 de pression et un troisième câble 4a connecté mécaniquement et électriquement au deuxième capteur 3. En outre, elle peut comprendre un quatrième câble 4b connecté mécaniquement et électriquement au deuxième capteur 3. Bien que la figure 1 ne représente que deux câbles par capteur, une pièce 1 selon l'invention peut comprendre deux, trois, quatre, cinq ou plus câbles pour chaque capteur.

Le corps de pièce 2 a une première cavité 21 qui loge le premier capteur 3, et de préférence une deuxième cavité 21 qui loge le deuxième capteur 3. La première cavité 21 s'ouvre sur l'extérieur du corps 2 par une première ouverture 22. La deuxième cavité 21 s'ouvre sur l'extérieur du corps 2 par une deuxième ouverture 22.

Le corps de pièce 2 a un premier conduit 23 qui forme un canal entre l'arrière de la première cavité 21 et l'extérieur du corps 2, et qui loge au moins une partie du premier câble 4a. De préférence, le premier conduit 23 loge au moins une partie du deuxième câble 4b. Le premier conduit 23 peut être courbé ou infléchi afin de guider le(s) câble(s) 4a, 4b dans une direction appropriée pour le(s) connecter à une unité de traitement des données.

Préférentiellement, le corps de pièce 2 a un deuxième conduit 24 qui forme un canal entre l'arrière de la deuxième cavité 21 et le premier conduit 23, et qui loge une première partie du troisième câble 4a. De préférence, le deuxième conduit 24 loge une première partie du quatrième câble 4b. Une deuxième partie du troisième câble 4a et potentiellement une deuxième partie du quatrième câble 4b sont logées dans une partie du premier conduit 23.

La pièce 1 comprend de préférence une grille 5 pour chaque cavité 21. La grille 5 est située entre l'extérieur du corps 2 et la membrane du capteur 3. Elle est de préférence reçue, au moins partiellement, dans un élargissement 25 de la cavité 21.

La pièce 1 peut par exemple être fabriquée de la façon suivante. Le corps de pièce 2 est d'abord fabriqué par un procédé de fabrication additive. Ensuite, le premier capteur 3 est introduit dans la première cavité 21 par la première ouverture 22 et chaque câble 4a, 4b est inséré dans le premier conduit 23. L'insertion de chaque câble 4a, 4b dans le premier conduit 23 peut être facilitée en attachant au(x) câble(s) un élément de guidage, de préférence plus rigide et/ou plus large que le(s) câble(s) afin de guider le(s) câble(s) dans le premier conduit 23. Cet élément de guidage peut ensuite être détaché de(s) câble(s).

Suite à sa fabrication, il est possible de procéder à une calibration de(s) capteur(s) avant d'assembler la pièce 1 avec d'autres éléments de la turbomachine d'aéronef.

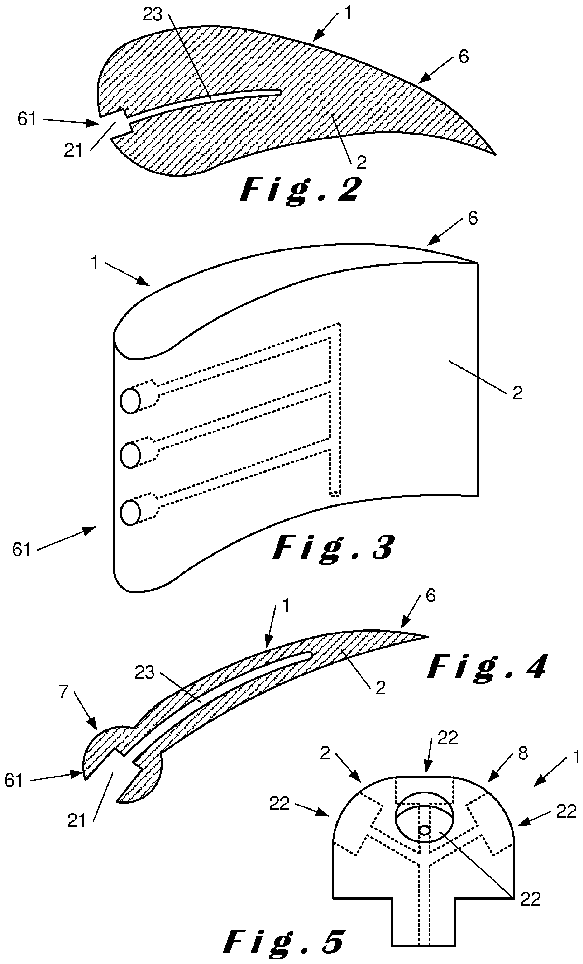

La figure 2 est une vue en coupe d'une aube 6 formant une pièce 1 selon un mode de réalisation de l'invention. La figure 3 est une vue tridimensionnelle d'une aube 6 formant une pièce 1 selon un mode de réalisation de l'invention.

Dans l'aube 6 représentée aux figures 2 et 3, les cavités 21 sont situées sur un bord d'attaque 61. A la figure 2, premier conduit 23 se prolonge dans un plan perpendiculaire à celui de la figure.

La figure 4 est une vue en coupe d'une aube 6 formant une pièce 1 selon un mode de réalisation de l'invention. Cette figure permet d'illustrer que la pièce 1, et en particulier le corps de pièce 2, peut comprendre une protubérance 7 dans laquelle la première cavité 21 est située. La protubérance 7 forme un élargissement du corps de pièce 2. Par exemple, l'aube 6 peut avoir une épaisseur d'environ 1 mm en-dehors de la protubérance 7 et une épaisseur d'environ 1,4 mm au niveau de la protubérance 7. Cette protubérance 7 peut être présente quelle que soit la forme de la pièce 1.

A la figure 4, premier conduit 23 se prolonge dans un plan perpendiculaire à celui de la figure.

La figure 5 est une vue de face d'une pièce 1 dont le corps de pièce 2 a une forme de dôme 8. La pièce 1 peut par exemple comprendre cinq capteurs, bien que seules quatre cavités 21 soient visibles à la figure 5. De préférence, au moins deux des ouvertures 22 des cavités 21 sont inclinées l'une par rapport à l'autre. La pièce 1 illustrée à la figure 5 est un module de mesure destiné à être disposé dans la turbomachine. Il est possible, quel que soit le mode de réalisation de l'invention, que la pièce 1, en particulier si elle est un module de mesure tel qu'illustré à la figure 5, comprenne trois, quatre, cinq, six ou plus capteurs, chacun dans une cavité du corps de pièce. Le mode de réalisation de la figure 5 ne fait pas partie de l'invention revendiquée.

Pour des raisons de clarté, certains éléments de la pièce 1 n'ont pas été représentés sur les figures 2 à 5.

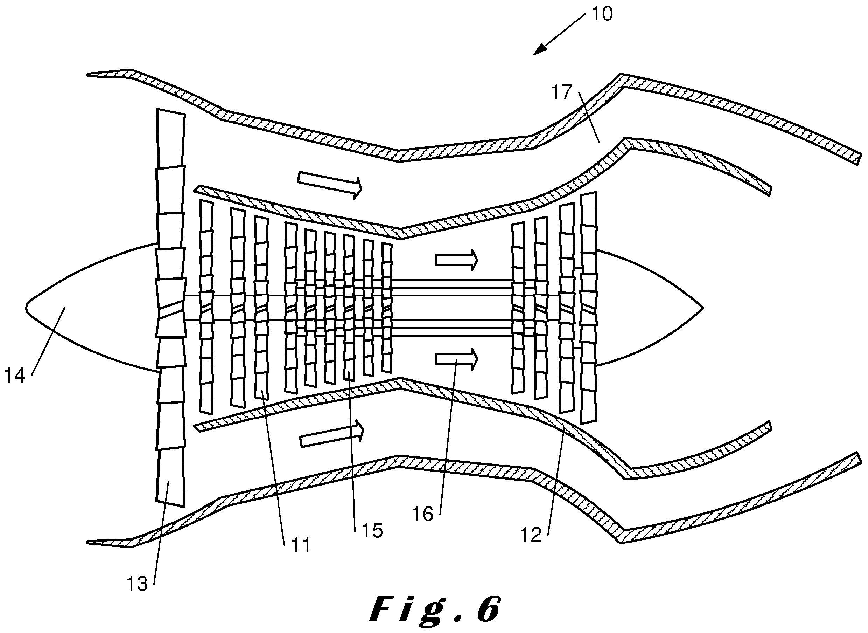

La figure 6 est une vue en coupe illustrant des éléments d'une turbomachine d'aéronef 10 apte à inclure une pièce 1 selon l'invention. La turbomachine 10 inclut notamment : un cône avant 14, une soufflante 13, un séparateur annulaire 12, un compresseur basse pression 11, et un compresseur haute pression 15. Le séparateur annulaire 12 sépare un flux d'air primaire 16 et un flux d'air secondaire 17.

Une pièce 1 selon n'importe quel mode de réalisation de l'invention est une aube 6 statorique ou rotorique du compresseur basse pression 11 ou du compresseur haute pression 15 de la turbomachine d'aéronef 10.

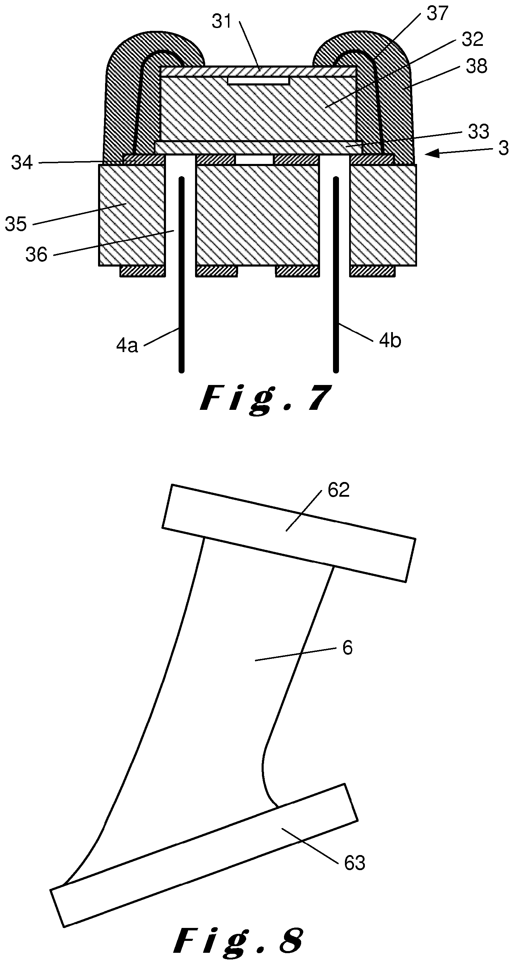

La figure 7 est une vue en coupe d'un capteur 3 compris dans un mode de réalisation de l'invention. Le capteur 3 représenté à la figure 7 peut être le premier, le deuxième ou n'importe quel capteur de pression d'une pièce 1 selon l'invention.

Le capteur 3 comprend une membrane 31. Comme le capteur 3 ne comprend pas de boitier de protection devant la membrane 31 et sur les côtés du capteur 3, une partie de la membre 31 fait partie de la surface extérieure du capteur 3.

De préférence, le capteur 3 comprend aussi un dispositif de détection 32 sur lequel la membrane 31 est fixée. Le dispositif de détection 32 est fixé sur une carte de circuit imprimé 35 par une colle non-conductrice 33. Le dispositif de détection 32 est connecté à des pistes conductrices 34 de la carte de circuit imprimé 35 par des fils conducteurs 37. Les fils conducteurs 37 sont encapsulés par un encapsulant 38. Les pistes conductrices 34 sont connectées aux premier 4a et deuxième 4b câbles, qui passent de préférence par des trous 36 dans la carte de circuit imprimé 35.

La figure 8 schématise un agencement d'une aube 6 dans une turbomachine d'aéronef apte à inclure une pièce selon l'invention. L'aube 6 est fixée d'une part à un carter 62 et d'autre partie à une virole 63.

En d'autres termes, l'invention se rapporte à une pièce 1 de turbomachine d'aéronef comprenant un corps de pièce 2 percé d'au moins une cavité 21 ouverte sur l'extérieur et d'au moins un conduit 23 rejoignant d'une part la cavité 21 et débouchant d'autre part sur l'extérieur. Chaque cavité 21 reçoit un capteur 3 de pression, et le conduit 23 correspond à la cavité 21 guide les câbles 4a, 4b connectés au capteur 3 vers l'extérieur du corps de pièce 2. La pièce 1 est une aube 6 de turbomachine d'aéronef.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Pièce (1) pour turbomachine d'aéronef (10), formant une aube (6) de la turbomachine d'aéronef (10), et comprenant un corps de pièce (2),
le corps de pièce (2) comprenant :
• une première cavité (21) débouchant à l'extérieur du corps de pièce (2) par une première ouverture (22), et
• un premier conduit (23) débouchant d'une part dans la première cavité (21) et d'autre part à l'extérieur du corps de pièce (2),
dans laquelle la première cavité (21) est située dans un bord d'attaque (61) de l'aube (6),
**caractérisée en ce que** la pièce (1) comprend un premier capteur (3) de pression et un premier câble (4a) connecté mécaniquement et électriquement au premier capteur (3),
le premier capteur (3) étant au moins partiellement logé dans la première cavité (21) et le premier câble (4a) étant au moins partiellement logé dans le premier conduit (23),
le premier capteur (3) comprenant une première membrane (31), le premier capteur (3) étant agencé de sorte qu'au moins une partie de la première membrane (31) fait partie de la surface extérieure du premier capteur (3).

2. Pièce (1) selon la revendication 1, comprenant en outre une première grille (5) située entre l'extérieur du corps de pièce (2) et le premier capteur (3).

3. Pièce (1) selon la revendication précédente, dans laquelle la première cavité (21) comprend un élargissement (25), la grille (5) étant reçue dans l'élargissement (25).

4. Pièce (1) selon l'une quelconque des revendications précédentes, dans lequel le corps de pièce est monobloc.

5. Pièce (1) selon l'une quelconque des revendications précédentes, comprenant une protubérance (7), la première cavité (21) étant située au moins partiellement dans la protubérance (7).

6. Pièce (1) selon l'une quelconque des revendications précédentes, comprenant en outre un deuxième câble (4b) connecté mécaniquement et électriquement au premier capteur (3), le deuxième câble (4b) étant au moins partiellement logé dans le premier conduit (23).

7. Pièce (1) selon l'une quelconque des revendications précédentes, dans laquelle le premier conduit (23) comprend au moins une courbe ou un infléchissement.

8. Pièce (1) selon l'une quelconque des revendications précédentes, comprenant en outre un deuxième capteur (3) de pression et un troisième câble (4a) connecté mécaniquement et électriquement au deuxième capteur (3),
le corps de pièce (2) comprenant :
• une deuxième cavité débouchant à l'extérieur du corps de pièce (2) par une deuxième ouverture (22), et
• un deuxième conduit (24) débouchant d'une part dans la deuxième cavité et d'autre part dans le premier conduit (23),
le deuxième capteur (3) étant au moins partiellement logé dans la deuxième cavité et le troisième câble (4a) étant partiellement logé dans le deuxième conduit (24) et partiellement logé dans une partie du premier conduit (23), et
le deuxième capteur (3) comprenant une deuxième membrane, le deuxième capteur (3) étant agencé de sorte qu'au moins une partie de la deuxième membrane fait partie de la surface extérieure du deuxième capteur (3).

9. Pièce (1) selon la revendication 8, dans laquelle le corps de pièce (2) a une forme de dôme (8), la deuxième ouverture (22) étant inclinée par rapport à la première ouverture (22).

10. Turbomachine d'aéronef (10) ou partie de turbomachine d'aéronef comprenant une pièce (1) selon l'une quelconque des revendications précédentes.

11. Procédé de fabrication une pièce (1) selon l'une quelconque des revendications 1 à 9 ou d'une turbomachine ou partie de turbomachine selon la revendication 10 et comprenant une impression tridimensionnelle ou une fabrication additive du corps de pièce (2), une insertion du premier capteur (3) dans la première cavité (21) et une insertion du premier câble (4a) dans le premier conduit (23).

12. Procédé de fabrication d'une turbomachine d'aéronef (10) selon la revendication 10 et comprenant une fabrication de la pièce (1), une calibration du premier capteur (3) et un assemblage de la pièce (1) avec d'autres éléments de la turbomachine d'aéronef (10).

## Patentansprüche

1. Teil (1) für Luftfahrzeug-Turbomaschine (10), der ein Schaufelblatt (6) der Luftfahrzeug-Turbomaschine (10) bildet und einen Teilkörper (2) umfasst, wobei der Teilkörper (2) umfasst:
• einen ersten Hohlraum (21), der durch eine erste Öffnung (22) an der Außenseite des Teilkörpers (2) mündet, und
• einen ersten Kanal (23), der einerseits in dem ersten Hohlraum (21) und andererseits an der Außenseite des Teilkörpers (2) mündet,
wobei der erste Hohlraum (21) sich in einer Anströmkante (61) des Schaufelblatts (6) befindet,
**dadurch gekennzeichnet, dass** der Teil (1) einen ersten Drucksensor (3) und ein erstes mechanisch und elektrisch an den ersten Sensor (3) angeschlossenes Kabel (4a) umfasst,
wobei der erste Sensor (3) mindestens teilweise in dem ersten Hohlraum (21) untergebracht ist und das erste Kabel (4a) mindestens teilweise in dem ersten Kanal (23) untergebracht ist,
wobei der erste Sensor (3) eine erste Membran (31) umfasst, wobei der erste Sensor (3) derart angeordnet ist, dass mindestens ein Abschnitt der ersten Membran (31) zu der Außenoberfläche des ersten Sensors (3) gehört.

2. Teil (1) nach Anspruch 1, umfassend des Weiteren ein erstes Gitter (5), das sich zwischen der Außenseite des Teilkörpers (2) und dem ersten Sensor (3) befindet.

3. Teil (1) nach dem vorstehenden Anspruch, wobei der erste Hohlraum (21) eine Verbreiterung (25) umfasst, wobei das Gitter (5) in der Verbreiterung (25) aufgenommen ist.

4. Teil (1) nach einem der vorstehenden Ansprüche, wobei der Teilkörper einstückig ist.

5. Teil (1) nach einem der vorstehenden Ansprüche, umfassend eine Auswölbung (7), wobei sich der erste Hohlraum (21) mindestens teilweise in der Auswölbung (7) befindet.

6. Teil (1) nach einem der vorstehenden Ansprüche, umfassend des Weiteren ein zweites mechanisch und elektrisch mit dem ersten Sensor (3) verbundenes Kabel (4b), wobei das zweite Kabel (4b) mindestens teilweise in dem ersten Kanal (23) untergebracht ist.

7. Teil (1) nach einem der vorstehenden Ansprüche, wobei der erste Kanal (23) mindestens eine Krümmung oder eine Biegung umfasst.

8. Teil (1) nach einem der vorstehenden Ansprüche, umfassend des Weiteren einen zweiten Drucksensor (3) und ein drittes mechanisch und elektrisch mit dem zweiten Sensor (3) verbundenes Kabel (4a),
wobei der Teilkörper (2) umfasst:
• einen zweiten Hohlraum, der durch eine zweite Öffnung (22) an der Außenseite des Teilkörpers (2) mündet, und
• einen zweiten Kanal (24), der einerseits in dem zweiten Hohlraum und andererseits in dem ersten Kanal (23) mündet,
wobei der zweite Sensor (3) mindestens teilweise in dem zweiten Hohlraum untergebracht ist und das dritte Kabel (4a) teilweise in dem zweiten Kanal (24) untergebracht ist und teilweise in einem Abschnitt des ersten Kanals (23) untergebracht ist, und
der zweite Sensor (3) eine zweite Membran umfasst, wobei der zweite Sensor (3) derart angeordnet ist, dass mindestens ein Abschnitt der zweiten Membran zu der Außenoberfläche des zweiten Sensors (3) gehört.

9. Teil (1) nach Anspruch 8, wobei der Teilkörper (2) eine Kuppelform (8) aufweist, die zweite Öffnung (22) bezogen auf die erste Öffnung (22) geneigt ist.

10. Luftfahrzeug-Turbomaschine (10) oder Luftfahrzeug-Turbomaschinenabschnitt, umfassend ein Teil (1) nach einem der vorstehenden Ansprüche.

11. Verfahren zum Fertigen eines Teils (1) nach einem der Ansprüche 1 bis 9 oder einer Turbomaschine oder eines Turbomaschinenabschnitts nach Anspruch 10 und umfassend einen dreidimensionalen Aufdruck oder eine additive Fertigung des Teilkörpers (2), eine Eingliederung des ersten Sensors (3) in den ersten Hohlraum (21) und eine Eingliederung des ersten Kabels (4a) in den ersten Kanal (23).

12. Verfahren zum Fertigen einer Luftfahrzeug-Turbomaschine (10) nach Anspruch 10 und umfassend eine Fertigung des Teils (1), eine Kalibrierung des ersten Sensors (3) und einen Zusammenbau des Teils (1) mit anderen Elementen der Luftfahrzeug-Turbomaschine (10).

## Claims

1. Part (1) for aircraft turbomachine (10), forming a blade (6) of the aircraft turbomachine (10), and comprising a part body (2), the part body (2) comprising:
- a first cavity (21) opening to the outside of the part body (2) through a first opening (22), and
- a first conduit (23) opening to, on the one hand, the first cavity (21), and on the other hand, the outside of the part body (2),
wherein the first cavity (21) is located in a leading edge (61) of the blade (6),
**characterised in that** the part (1) comprises a first pressure sensor (3) and a first cable (4a) mechanically and electrically connected to the first sensor (3),
the first sensor (3) being at least partially housed in the first cavity (21) and the first cable (4a) being at least partially housed in the first conduit (23),
the first sensor (3) comprising a first membrane (31), the first sensor (3) being arranged such that at least one portion of the first membrane (31) forms part of the outer surface of the first sensor (3).

2. Part (1) according to claim 1, further comprising a first grille (5) located between the outside of the part body (2) and the first sensor (3).

3. Part (1) according to the preceding claim, wherein the first cavity (21) comprises an expansion (25), the grille (5) being received in the expansion (25).

4. Part (1) according to any one of the preceding claims, wherein the part body is one-piece.

5. Part (1) according to any one of the preceding claims, comprising a projection (7), the first cavity (21) being located at least partially in the projection (7).

6. Part (1) according to any one of the preceding claims, further comprising a second cable (4b) mechanically and electrically connected to the first sensor (3), the second cable (4b) being at least partially housed in the first conduit (23).

7. Part (1) according to any one of the preceding claims, wherein the first conduit (23) comprises at least one curve or one inflection.

8. Part (1) according to any one of the preceding claims, further comprising a second pressure sensor (3) and a third cable (4a) mechanically and electrically connected to the second sensor (3),
the part body (2) comprising:
- a second cavity opening to the outside of the part body (2) through a second opening (22), and
- a second conduit (24) opening to, on the one hand, the second cavity and on the other hand, the first conduit (23),
the second sensor (3) being at least partially housed in the second cavity and the third cable (4a) being partially housed in the second conduit (24) and partially housed in a portion of the first conduit (23), and
the second sensor (3) comprising a second membrane, the second sensor (3) being arranged such that at least one portion of the second membrane forms part of the outer surface of the second sensor (3).

9. Part (1) according to claim 8, wherein the part body (2) has a dome shape (8), the second opening (22) being inclined with respect to the first opening (22).

10. Aircraft turbomachine (10) or aircraft turbomachine portion comprising a part (1) according to any one of the preceding claims.

11. Method for manufacturing a part (1) according to any one of claims 1 to 9 or a turbomachine or turbomachine portion according to claim 10 and comprising a three-dimensional printing or an additive manufacturing of the part body (2), an insertion of the first sensor (3) in the first cavity (21) and an insertion of the first cable (4a) in the first conduit (23).

12. Method for manufacturing an aircraft turbomachine (10) according to claim 10 and comprising a manufacturing of the part (1), a calibration of the first sensor (3) and an assembly of the part (1) with other elements of the aircraft turbomachine (10).
